# EUROPEAN PATENT APPLICATION

(11) **EP 4 841 679 A1**
(43) Date of publication of application: **18.11.2026**
(21) Application number: 25176506.1
(22) Date of filing: 14.05.2025
(51) Int. Cl.: H01M 4/04, H01M 10/052

(54) **METHOD FOR THE MANUFACTURE OF A SHAPED ELECTRODE**

(71) Applicant: Cellforce Group GmbH, 72138 Kirchentellinsfurt (DE)
(72) Inventor: ROSCHER, Michael, 09117 Chemnitz (DE)
(74) Representative: Michalski Hüttermann & Partner mbB

(57) **Abstract**

The present invention relates to a method for the manufacturing of a shaped electrode, the method comprising dry mixing particles of active electrode material and binder to form a dry powder, forming a dry electrode film from the dry powder, and cutting a shaped electrode from the dry electrode film. The present invention further relates to a shaped electrode obtained by the method, a battery electrode assembly comprising a shaped electrode and a shaped current collector, and a battery comprising such a shaped electrode and/or battery electrode assembly.

## Description

### Field of the invention

The invention relates to a method for the manufacture of a shaped electrode.

### Background

The manufacture of electrodes is generally known in the art. In particular, methods for producing electrodes by applying slurries of active material, binder and conductive additives onto a current collector and subsequently drying the layer are well established. More recently, methods involving dry processing, such as the formation of dry, solvent-free films containing the active material and binder, have been developed. These dry electrode films are typically laminated onto current collectors using thermal or mechanical means to form the finished electrode.

Electrodes and current collectors often need to have specific shapes to fulfill functional and structural requirements in electrochemical cells. Shapes of electrodes can define the active area, enable precise alignment with separators and counter-electrodes, and facilitate tab welding or current collection zones. In pouch cells or cylindrical formats, specific geometries are required to ensure uniform current distribution, thermal behavior, and mechanical integration. Certain shapes may also be necessary to leave defined edge zones free of active material to prevent short circuits, support sealing areas, or provide space for electrolyte flow or gas release.

Shaping of electrode-current collector laminates often involve laser cutting techniques and have been employed to structure already laminated electrodes with high precision. Other methods, such as photolithography, wet etching, electrochemical deposition, and additive manufacturing may have been utilized in order to create desired shapes of electrodes on current collectors. However, these techniques are either typically applied after the electrode is already bonded to the current collector and/or may involve complex or costly process steps.

The dry electrode manufacturing methods known in the art still offer potential for improvement, particularly with respect to the creation of specific shapes. It is therefore an aspect of the present application to provide an improved method for the manufacture of a shaped electrode.

These and further objects are met with methods and means according to the independent claims of the present invention. The dependent claims are related to specific embodiments.

### Summary of the Invention

The present invention relates a method for the manufacturing of a shaped electrode, the method comprising:
dry mixing particles of active electrode material and binder to form a dry powder;
forming a dry electrode film from the dry powder; and
cutting a shaped electrode from the dry electrode film.

According to the present invention, the term "shaped electrode" may refer to an electrode having a defined contour or geometry as particularly obtained by cutting from a film, the contour being different from the full planar extent of the original film.

According to the present invention, the term "active electrode material" may refer to a material capable of reversibly intercalating, alloying with, or converting lithium or other mobile ions during operation of an electrochemical cell.

According to the present invention, the term "electrode material particles" may refer to solid, particulate electrode material that are added in powder form to the dry mixing step, without prior dissolution or dispersion in a solvent.

According to the present invention, the term "binder particles" may refer to solid, particulate binder materials that are added in powder form to the dry mixing step, without prior dissolution or dispersion in a solvent or undergoing any defibrillating process.

**It** has surprisingly been found that with the method for the manufacturing of a shaped electrode according to the invention, inter alia any number of the following benefits can be achieved. Particularly it may be achieved that patterned electrodes can be fabricated without requiring a wet-coating or solvent-based step. Particularly it may be achieved that cutting and shaping of the electrode geometry is performed prior to lamination, thereby enabling increased process flexibility and reduction of material waste. Furthermore, it may be achieved that wasted from cutting may have increased recyclability. Particularly, with the present method the patterned electrodes can be obtained by cutting the electrode directly and prior to laminating the electrode onto a current collector, yielding as waste only cut off electrode material which does not need to be separated from cut off current collector material.

According to one preferred embodiment, before the step of cutting the shaped electrode from the dry electrode film, the dry electrode film is not contacted and/or laminated to a current collector.

According to the present invention, the term "contacted" may refer to the physical placement or temporary engagement of the dry electrode film with a surface of a current collector without necessarily implying mechanical or thermal bonding.

It has surprisingly been found that by ensuring the dry electrode film is not contacted or laminated to a current collector prior to cutting, further increased process flexibility is achieved and material waste can be reduced. Furthermore, it may be achieved that wasted from cutting may have further increased recyclability.

According to one preferred embodiment, the method further comprises the steps of stacking the shaped electrode onto a current collector having a first surface after cutting the shaped electrode from the dry electrode film, so that the shaped electrode is in contact with the current collector, and laminating the shaped electrode to the current collector.

According to the present invention, the term "stacking" may refer to the placement or alignment of a shaped electrode onto a current collector without applying pressure, heat, or adhesive bonding during the placement step.

According to the present invention, the term "laminating" may refer to the process of joining the shaped electrode to the surface of the current collector by applying mechanical pressure and/or heat, thereby establishing physical adhesion between the electrode and the collector, optionally without the use of additional adhesive layers.

It has surprisingly been found that stacking the shaped electrode onto the current collector after cutting allows for particularly flexible alignment and reduces mechanical stress during shaping. Particularly, it has been found that shaping the electrode while it is not stacked on a current collector allows shaping with lower energy input and more precision.

According to one preferred embodiment, the method further comprises the step of cutting a shape from the current collector to obtain a shaped electrode on a shaped current collector.

It may be achieved that the shaping of the current collector provides improved alignment with the shaped electrode and allows defined edge zones, free of collector material, for electrical isolation, sealing, or terminal integration. Particularly, it may be achieved by the present method that the current collector shape and shaped electrode shape are different from each other, allowing for additional options during application.

According to one preferred embodiment, the shape of the shaped electrode is aligned with the shape of the shaped current collector, wherein preferably the shape of the shaped electrode has a smaller area than the shape of the shaped current collector.

According to the present invention, the term "aligned with" may refer to a positional relationship in which the contour or geometry of the shaped electrode is arranged to correspond spatially with that of the shaped current collector, such that the electrode is positioned within the boundaries of the current collector in a defined and reproducible manner.

According to the present invention, the expression "smaller area" may refer to the condition in which the projected surface area of the shaped electrode is less than the projected surface area of the shaped current collector, such that peripheral zones of the current collector remain free of active electrode material. In other words, the contour of the shaped electrode is positioned in correspondence with the contour of the shaped current collector, preferably such that the surface area defined by the shaped electrode is smaller than that defined by the shaped current collector.

It has surprisingly been found that aligning the shape of the shaped electrode with a larger-area current collector allows for defined edge margins that can further improve electrical insulation, heat dissipation, and process stability. It may be achieved that the free zones of the current collector can be used for welding tabs, sealing layers, or mechanical fixation without interfering with the active electrode region.

According to one preferred embodiment, before cutting the shaped electrode, the dry electrode film is contacted with a surface of a liner, wherein the dry electrode film optionally is rolled up with the liner on a roll for intermediate storage and/or transport and wherein the dry electrode film subsequently is rolled off again with the liner from the roll for the step of cutting the shape electrode from the dry electrode film.

According to the present invention, the term "liner" may refer to a flexible support layer, typically comprising a polymer film or metal foil, which is placed in contact with the dry electrode film to facilitate handling, storage, transport, or processing without mechanically altering or contaminating the electrode material.

According to the present invention, the term "rolled up" may refer to the process of winding the dry electrode film and liner onto a cylindrical core or spool for the purpose of intermediate storage or transport. The term "rolled off" may refer to the subsequent unwinding of the roll for continued processing.

It has surprisingly been found that contacting the dry electrode film with a liner prior to cutting enables particularly stable and damage-free processing during intermediate handling. It may be achieved that the film can be stored and transported in roll form without deformation or contamination, and later reprocessed in a continuous, controlled manner for cutting and/or laminating.

According to one preferred embodiment, the liner is removed from the dry electrode film before cutting the shaped electrode from the dry electrode film.

It has surprisingly been found that removing the liner before cutting the shaped electrode allows direct access to the unsupported film, which may be desirable when high cutting precision is required or when the cutting process involves localized heating or mechanical tooling that may otherwise damage or displace the liner anyway.

According to one preferred embodiment, the shaped electrode is cut from the dry electrode film on the liner before removing the liner from the dry electrode film.

It has surprisingly been found that cutting the shaped electrode while the dry electrode film remains on the liner enhances mechanical stability during the shaping step and also allows that the shaped electrode may further be transported on the liner. It may be achieved that deformation, misalignment, or tearing of the film can further be minimized, particularly when handling thin or brittle dry films.

In other words, according to one preferred embodiment, before cutting the shaped electrode, the dry electrode film is contacted with a surface of a liner, wherein the dry electrode film is optionally rolled up with the liner on a roll for intermediate storage and/or transport, and subsequently rolled off again with the liner from the roll for the step of cutting the shaped electrode from the dry electrode film. In certain variants, the liner is removed from the dry electrode film prior to the cutting step. In alternative variants, the cutting of the shaped electrode is carried out while the dry electrode film remains on the liner. Accordingly, the step of "cutting the shaped electrode from the dry electrode film" may be performed either before or after removing the liner, depending on process preference.

According to one preferred embodiment, before cutting the shaped electrode, the dry electrode film is contacted with a surface of a liner and the shaped electrode is cut from the dry electrode film on the liner, wherein the shaped electrode is optionally rolled up with the liner on a roll for intermediate storage and/or transport and wherein the shaped electrode subsequently is rolled off again with the liner from the roll for further application.

According to the present invention, the term "further application" may refer to any subsequent processing step involving the shaped electrode, including stacking, laminating to a current collector, assembling into an electrode assembly, or integration into a battery cell.

It has surprisingly been found that cutting the shaped electrode while it is supported on a liner and maintaining the shaped electrode on the liner for subsequent handling enables a stable, continuous processing sequence. It may be achieved that the shaped electrode is protected during transport and positioning, and that multiple shaped electrodes can be processed in roll form prior to final assembly.

According to one preferred embodiment, after cutting the shaped electrode, the shaped electrode is contacted with a surface of a liner, wherein the shaped electrode is optionally rolled up with the liner on a roll for intermediate storage and/or transport and wherein the shaped electrode subsequently is rolled off again with the liner from the roll for further application.

According to the present invention, the expression "after cutting" may refer to a process step occurring immediately or sequentially after the shaped electrode has been separated from the surrounding electrode film, and before its integration into a subsequent assembly or application step.

It has surprisingly been found that contacting the shaped electrode with a liner after the cutting step provides further mechanical protection and further facilitates structured handling during intermediate processing. **It** may be achieved that shaped electrodes can be safely stored, transported, or positioned for downstream assembly steps without damage or deformation.

According to one preferred embodiment, the shaped electrode is cut from the dry electrode film using a cutting method selected from the group consisting of laser cutting, mechanical cutting, die cutting, jet cutting, and ultrasonic cutting, preferably laser cutting and die cutting.

According to the present invention, the term "cutting" may also include other physical separation techniques. For example, according to an alternative preferred embodiment, the shaped electrode is cut from the dry electrode film by breaking the dry electrode film. It may be achieved that this allows for particularly efficient cutting of films having high abrasive properties without exposing the cutting tools to excessive war.

According to the present invention, the term "cutting method" may refer to any physical separation process used to define a shape within the dry electrode film by removing material or separating material along a specified contour.

According to the present invention, the term "laser cutting" may refer to a contactless cutting method in which a focused laser beam is used to thermally ablate or vaporize a portion of the dry electrode film along a defined contour, thereby producing a shaped electrode.

According to the present invention, the term "die cutting" may refer to a mechanical cutting method in which a predefined shape is cut out of the dry electrode film using a rigid or flexible cutting die, typically operated with applied pressure in a stamping or rolling motion.

It has surprisingly been found that selecting specific cutting methods, such as particularly laser cutting or die cutting, allows the definition of particularly precise electrode geometries while reducing the potential for damaging the dry film structure. It may be achieved that the method accommodates both rigid and flexible electrode films and enables particularly fast, scalable shaping operations with minimal thermal or mechanical impact. Furthermore, it has been found that these methods may be particularly suitable for the present method, as they are applicable to the electrode films on various surfaces and are adjustable depending on the cutting surface or order of the method steps regarding the application of a liner.

According to one preferred embodiment, the cutting of the shaped electrode from the dry electrode film is performed while the dry electrode film is supported on a cutting surface.

According to the present invention, the term "cutting surface" may refer to a physical surface that supports the dry electrode film during the cutting operation, the surface being selected to provide sufficient mechanical stability without interfering with the cutting process.

It has surprisingly been found that supporting the dry electrode film on a cutting surface during the cutting step enables higher cutting precision and dimensional stability. It may be achieved that deformation or displacement of the dry film is reduced, particularly when processing thin or brittle films in roll-to-roll or sheet-based formats.

According to one preferred embodiment, the cutting surface is a surface of a liner, a roller, or a conveyor belt.

According to the present invention, the term "conveyor belt" may refer to a continuous, flexible transport surface configured to move the dry electrode film and optionally the liner through one or more processing stations, including cutting.

According to the present invention, the term "roller" may refer to a cylindrical support structure configured to transport the dry electrode film and optionally a liner, which may also serve to press or redirect the dry electrode film and liner during handling, shaping, or further processing steps.

It has surprisingly been found that using a cutting surface selected from a liner, a roller, or a conveyor belt provides further adaptable mechanical support during shaping of the dry electrode film. It may be achieved that the cutting method is particularly compatible with both batch-wise and continuous processing formats, enabling integration into automated roll-to-roll manufacturing systems.

According to one preferred embodiment, the cutting of the shaped electrode from the dry electrode film is performed using laser cutting while the dry electrode film is supported on a roller.

It has surprisingly been found that performing laser cutting while the dry electrode film is supported on a roller enables particularly precise and continuous shaping of the electrode in a roll-to-roll configuration. It may be achieved that the electrode film can be guided and stabilized during cutting, allowing high positional accuracy and compatibility with automated manufacturing lines.

According to one preferred embodiment, the cutting of the shaped electrode from the dry electrode film is performed using die cutting while the dry electrode film is supported on a liner.

It has surprisingly been found that die cutting the shaped electrode while the dry electrode film is supported on a liner enables particularly precise, repeatable shaping using standardized tooling. It may be achieved that the method is well-suited for high-throughput, low-cost fabrication of patterned electrodes with complex or recurring geometries.

According to one preferred embodiment, the liner comprises a material selected from the group consisting of polyethylene terephthalate (PET), polyimide (PI), polytetrafluoroethylene (PTFE), polypropylene (PP), aluminum foil, copper foil, and stainless steel foil.

It has surprisingly been found that using liner materials selected from polymers such as PET, PI, PTFE, or PP, or from metal foils such as aluminum, copper, or stainless steel, enables particularly easy handling of the electrode film or shaped electrode and optionally also enables easy cutting of the electrode film or transfer of the shaped electrode onto a current collector.

According to one preferred embodiment, the current collector comprises a material selected from the group consisting of aluminum, copper, nickel, stainless steel, and titanium, preferably wherein the current collector is selected from aluminum or copper.

According to the present invention, the term "current collector" may refer to an electrically conductive substrate configured to collect and conduct electric current from the electrode material, typically in the form of a metal foil or mesh. According to the present invention, any current collector material commonly used in the manufacture of electrodes for electrochemical cells may be employed, including but not limited to those specifically mentioned herein.

**It** has surprisingly been found that using current collectors made from materials such as aluminum, copper, nickel, stainless steel, or titanium allows for improved compatibility with a wide range of electrode chemistries and cell formats. **It** may be achieved that electrical conductivity, mechanical stability, and corrosion resistance are optimized depending on the electrode type, with aluminum and copper being particularly suitable for cathodes and anodes, respectively.

According to one preferred embodiment, the binder particles consist of one or more polymers, preferably thermoplastic polymers.

According to the present invention, the term "thermoplastic polymer" may refer to a polymer that softens when heated and hardens when cooled, allowing it to deform and flow under thermal or mechanical compaction, thereby enabling cohesion within the electrode film.

It has surprisingly been found that using dry binder particles consisting of one or more polymers, preferably thermoplastic polymers, enables the formation of cohesive and processable dry electrode films without requiring solvent-based dispersion and enabling a free standing electrode film that may further be advantageously processed according to the present invention. It may be achieved that the binder particles undergo softening or mechanical entanglement during compaction, thereby forming mechanically stable shaped electrodes.

According to the present invention, the polymer used as a binder may be selected from a wide range of thermoplastic and non-thermoplastic materials, including fluorinated polymers, polyolefins, and cellulose derivatives, chosen for their ability to provide mechanical cohesion and flexibility to the dry electrode film.

According to one preferred embodiment, the polymer is selected from the group consisting of fluoropolymers, polyolefins, polyacrylates, polymethacrylates, polyvinyl acetates, polyvinyl alcohols, and cellulose-based polymers, preferably from the group consisting of polytetrafluoroethylene (PTFE), polyvinylidene fluoride (PVDF), styrene-butadiene rubber (SBR), carboxymethylcellulose (CMC), methylcellulose (MC), and hydroxypropylcellulose (HPC).

It has surprisingly been found that selecting polymers from the group consisting of fluoropolymers, polyolefins, polyacrylates, polymethacrylates, polyvinyl acetates, polyvinyl alcohols, and cellulose-based polymers enables tailoring of the binder properties to the mechanical and thermal requirements of the dry processing method. It may be achieved that preferred polymers such as PTFE, PVDF, SBR, CMC, MC, or HPC provide an advantageous balance between processability, cohesion, and compatibility with different active materials.

According to one preferred embodiment, the binder particles have a volume-based median particle size (D₅₀) in the range of ≥ 0.5 µm to ≤ 40 µm, preferably ≥ 1 µm to ≤ 20 µm, more preferably ≥ 2 µm to ≤ 10 µm.

According to the present invention, the term "volume-based median particle size (D₅₀)" may refer to the particle diameter at which 50% of the total volume of binder particles in the distribution is composed of particles smaller than that diameter, particularly as determined by laser diffraction for example in accordance with ISO 13320.

It has surprisingly been found that selecting binder particles with a volume-based median particle size (D₅₀) in the specified range supports the formation of particularly homogeneous, compactable dry mixtures and promotes stable mechanical bonding within the dry electrode film. It may be achieved that the particles are large enough for controlled powder handling yet small enough to distribute uniformly and activate during compaction.

According to one preferred embodiment, the active electrode material comprises particles of an electrochemically active compound, preferably selected from the group consisting of intercalation materials, alloying materials, conversion materials, and lithium metal.

According to the present invention, the term "electrochemically active compound" may refer to a material that undergoes a reversible electrochemical reaction with a mobile ion species (such as lithium ions) during charging and discharging of an electrochemical cell. The active compound may function through one or more of the following mechanisms: intercalation, alloying, or conversion, or may consist of elemental lithium metal. Intercalation materials are those in which lithium ions are reversibly inserted into host lattice structures. Alloying materials form reversible alloys with lithium, while conversion materials undergo phase transformations involving lithium incorporation and release.

It has surprisingly been found that using active electrode materials based on intercalation, alloying, or conversion mechanisms enables the method to be applied across a wide range of anode and cathode chemistries. It may be achieved that the same dry processing approach is compatible with both high-capacity and high-rate materials, providing flexibility in cell design.

According to one preferred embodiment, the electrochemically active compound is selected from the group consisting of graphite, hard carbon, soft carbon, silicon, silicon oxides, silicon-carbon composites, lithium titanate, lithium cobalt oxide (LCO), lithium nickel cobalt manganese oxide (NMC), lithium manganese oxide (LMO), lithium iron phosphate (LFP), lithium nickel cobalt aluminum oxide (NCA), and mixtures thereof, preferably from the group consisting of silicon-carbon composites, lithium nickel cobalt manganese oxide (NMC), and graphite.

It has surprisingly been found that the dry processing method according to the invention is applicable to a broad selection of electrochemically active materials, including both insertion and alloying types. It may be achieved that particularly preferred materials, such as silicon-carbon composites, NMC, and graphite, exhibit high compatibility with dry mixing, film formation, and shaping, while enabling high energy density and electrochemical stability.

According to one preferred embodiment, the active electrode material has a volume-based median particle size (D₅₀) in the range of ≥ 0.1 µm to ≤ 30 µm, preferably ≥ 1 µm to ≤ 20 µm, more preferably ≥ 2 µm to ≤ 10 µm.

**It** has surprisingly been found that using binder particles with a volume-based median particle size (D₅₀) in the specified range allows efficient distribution and interlocking of binder within the dry powder. It may be achieved that smaller particles improve homogeneity and compaction behavior, while remaining large enough to avoid airborne fines and undesirable dust formation during handling.

According to one preferred embodiment, the dry powder comprises active electrode material in an amount in the range of ≥ 80 wt% to ≤ 98 wt%, preferably ≥ 85 wt% to ≤ 95 wt%, more preferably ≥ 88 wt% to ≤ 92 wt%, based on the total weight of the dry powder.

It has surprisingly been found that using active electrode material in in the given amount ensures a high energy density while maintaining sufficient mechanical cohesion within the electrode film. It may be achieved that lower binder content improves electrochemical performance while remaining processable in a dry film manufacturing route.

According to one preferred embodiment, the dry powder comprises binder in an amount in the range of ≥ 2 wt% to ≤ 20 wt%, preferably ≥ 5 wt% to ≤ 15 wt%, more preferably ≥ 8 wt% to ≤ 12 wt%, based on the total weight of the dry powder.

Correspondingly, it has surprisingly been found that using the binder the given amount provides a sufficient degree of mechanical cohesion for film formation without significantly impairing the electrochemical properties of the electrode. It may be achieved that within the preferred range, the binder content is high enough to ensure structural integrity while remaining low enough to maintain high active material loading and energy density.

According to one preferred embodiment, the dry electrode film is formed by compacting the dry powder at a temperature in the range of ≥ 50 °C to ≤ 200 °C, preferably ≥ 80 °C to ≤ 160 °C, more preferably ≥ 100 °C to ≤ 140 °C.

According to the present invention, the compaction temperature may be measured as the surface temperature of the compaction equipment (e.g. calender roll or pressing plate) in contact with the dry powder or dry electrode film.

It has surprisingly been found that compacting the dry powder at the given temperature improves the cohesion and integrity of the resulting dry electrode film. It may be achieved that thermoplastic binder particles soften or partially fuse during compaction, facilitating binder distribution and adhesion between particles without requiring a solvent phase.

According to one preferred embodiment, the dry electrode film is formed by compacting the dry powder under a pressure in the range of ≥ 10 MPa to ≤ 300 MPa, preferably ≥ 20 MPa to ≤ 200 MPa, more preferably ≥ 50 MPa to ≤ 150 MPa.

It has surprisingly been found that compacting the dry powder under the provided pressure leads to the formation of mechanically stable and dimensionally uniform dry electrode films. It may be achieved that particle packing density is increased and binder particles are distributed and engaged effectively, without the need for liquid-phase processing.

According to one preferred embodiment, the formation of the dry electrode film comprises compacting the dry powder such that the thickness of the resulting film is reduced to ≥ 10 % to ≤ 80 % of its initial loose-packed thickness, preferably to ≥ 15 % to ≤ 70 %, more preferably ≥ 20 % to ≤ 60 %, and most preferably to ≥ 25 % to ≤ 50 %.

According to the present invention, the term "initial loose-packed thickness" may refer to the vertical height of a dry powder layer after deposition but before compaction. The "initial loose-packed thickness" may also refer to a theoretical thickness of a uncompacted layer based on the tap density of the dry powder. In this case, the initial loose-packed thickness corresponds to the height a given mass of dry powder would occupy over a defined area, based on its tap density as determined in accordance with ISO 3953, at ambient conditions.

It has surprisingly been found that compacting the dry powder in the above range results in a mechanically cohesive and structurally stable dry electrode film that allows for particularly easy handling and cutting. It may be achieved that a controlled degree of densification ensures sufficient particle-to-particle contact and binder distribution, thereby enabling reliable shaping and lamination of the electrode. Particularly, with the above densification, the resulting shaped electrode still may allow further processing such as for example in the form of lamination to the current collector without significant deviations or with controllable influence of the shape of the resulting laminated shaped electrode.

According to one preferred embodiment, the dry electrode film formed from the dry powder has a thickness in the range of ≥ 50 µm to ≤ 1000 µm, preferably ≥ 100 µm to ≤ 500 µm, more preferably ≥ 150 µm to ≤ 300 µm.

It has surprisingly been found that forming a dry electrode film with a thickness in the range of ≥ 50 µm to ≤ 1000 µm provides particularly good mechanical strength and handling stability for downstream processing. It may be achieved that the film remains free-standing and shape-retaining, while offering flexibility in electrode loading for both high-capacity and thin-format applications. Furthermore, it may be achieved that laminating the resulting shaped electrodes on current collectors may yield electrodes with the desired thickness while having a particularly good adhesion.

According to one preferred embodiment, the thickness of the electrode after lamination to the current collector is reduced to ≥ 10 % to ≤ 80 % of the thickness of the dry electrode film prior to lamination, preferably to ≥ 15 % to ≤ 70 %, more preferably ≥ 20 % to ≤ 60 %, and most preferably to ≥ 25 % to ≤ 50 %.

It has surprisingly been found that reducing the thickness of the electrode during lamination the given percentage of the original dry film thickness improves contact with the current collector and enhances mechanical integration. It may be achieved that such densification increases particle packing and interfacial adhesion, resulting in lower internal resistance and improved electrochemical performance.

According to one preferred embodiment, the electrode after lamination to the current collector has a thickness in the range of ≥ 40 µm to ≤ 800 µm, preferably ≥ 80 µm to ≤ 400 µm, more preferably ≥ 100 µm to ≤ 250 µm.

It has surprisingly been found that providing a laminated electrode with a thickness the given range allows particularly good flexibility for integration into a wide variety of cell formats. It may be achieved that the electrode maintains sufficient energy storage capacity while ensuring mechanical stability and compatibility with pouch, cylindrical, or prismatic cell architectures.

The invention further provides a shaped electrode obtained by the method according the invention.

It has surprisingly been found that with the shaped electrode obtained by the method according to the invention, inter alia any number of the following benefits can be achieved. Particularly it may be achieved that the electrode has a defined contour, tailored to its intended use, while additionally being manufactured through a solvent-free process. Particularly it may be achieved that the electrode can be stacked, laminated, or stored in a flexible and efficient manner, and consists of well-compacted active material and binder with minimal processing-induced damage or waste. Particularly, the shaped electrode may have a shape that has not been accessible with previous dry methods.

The invention further provides a battery electrode assembly comprising a shaped electrode according to the invention and a shaped current collector, wherein the shape of the shaped electrode has a smaller area than the shape of the shaped current collector, wherein the shaped electrode is laminated to the current collector.

It has surprisingly been found that with a battery electrode assembly comprising a shaped electrode laminated to a shaped current collector of larger area, inter alia any number of the following benefits can be achieved. Particularly it may be achieved that the exposed regions of the current collector can be used for mechanical alignment, insulation, tab welding, or sealing without interference from the electrode material. Particularly it may be achieved that the shaping of both components improves stackability and electrical performance in structured cell assemblies.

The invention further provides a battery comprising a shaped electrode according to the invention and/or a battery electrode assembly according to the invention.

According to the present invention, the term "battery" may refer to an electrochemical energy storage device comprising at least one shaped electrode according to the invention, optionally in combination with one or more counter-electrodes, separators, electrolytes, and a housing. The battery may be in the form of a full cell, half-cell, or part of a stacked or wound cell system.

It has surprisingly been found that with a battery comprising a shaped electrode and/or a battery electrode assembly according to the invention, inter alia any number of the following benefits can be achieved. Particularly it may be achieved that the battery benefits from solvent-free electrode processing, precise electrode patterning, and improved electrode-to-collector interface. Particularly it may be achieved that design freedom in electrode shape allows optimization of cell layout, electrical contacts, and packaging.

In the following, the invention is explained by way of example with reference to the accompanying drawing and the accompanying examples by way of preferred embodiments, wherein the features shown below may each individually or in combination constitute an aspect of the invention:
Figure 1 illustrates a method according to one embodiment;
Figure 2 shows a method according to an alternative embodiment;
Figure 3 shows a method according to a further alternative embodiment; and
Figure 4 shows a shaped electrode obtained by the method according to one embodiment.

The sizes and relative positions of elements in the figures are not necessarily drawn to scale and some of these elements are enlarged and positioned to improve figure legibility. Further, the particular shapes of the elements as drawn are not intended to convey any information regarding the actual shape of the particular elements, and have been solely selected for ease of recognition in the figures.

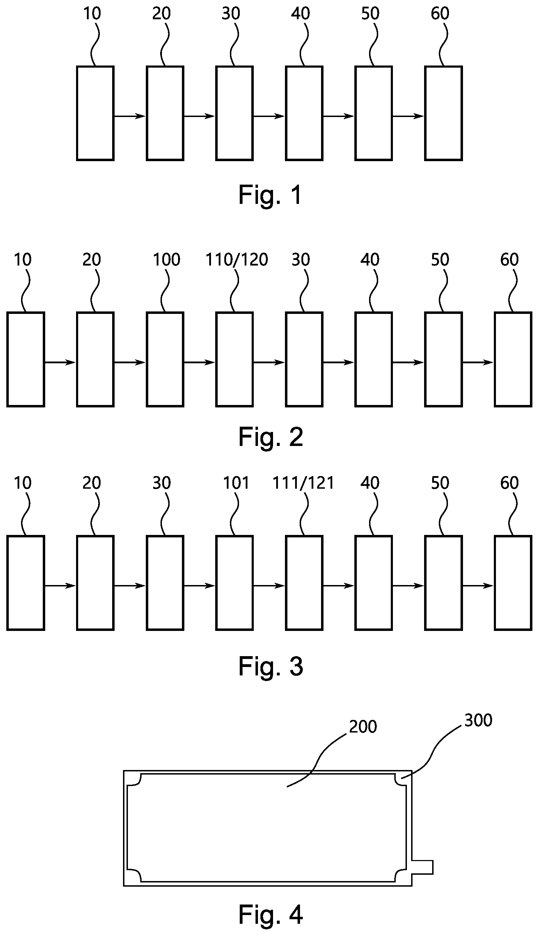

Figure 1 shows a schematic process sequence of a method for the manufacturing of a shaped electrode 200 according to one embodiment. The process comprises the steps of dry mixing 10 particles of active electrode material and binder to form a dry powder, forming 20 a dry electrode film from the dry powder, and cutting 30 a shaped electrode 200 from the dry electrode film. The shaped electrode is then optionally stacked 40 onto a current collector, laminated 50 to the current collector, and further optionally the current collector is shaped by cutting 60 a corresponding shape from the current collector, forming a shaped current collector 300. A correspondingly received shaped electrode 200 on the shaped current collector 300 is schematically shown in Figure 4. This method allows for shaped electrodes to be manufactured in a structured and scalable manner, using a fully dry process. Particularly it may be achieved that cutting of the electrode geometry can be performed prior to lamination, providing process flexibility, reduced material waste, and improved recyclability of offcuts. The method further allows the separation of shaping and bonding operations, supporting higher precision and better control of each step.

Figure 2 shows a schematic process sequence of a method for the manufacturing of a shaped electrode 200 according to an alternative embodiment, wherein before cutting 30 the shaped electrode 200 from the dry electrode film, the dry electrode film is contacted 100 with a liner. The dry electrode film is optionally rolled up 110 and subsequently rolled off 120 with the liner for the cutting step. The shaped electrode 200 is then optionally stacked 40 onto a current collector, laminated 50 to the current collector, and further optionally the current collector is shaped by cutting 60 a corresponding shape from the current collector, forming a shaped current collector 300. The method as shown in Figure 2 facilitates intermediate handling, temporary storage, and roll-to-roll processing without compromising the structural integrity of the film. Particularly it may be achieved that the film is mechanically stabilized by the liner during the shaping step, and can be stored or transported without deformation or contamination.

Figure 3 shows a schematic process sequence of a method for the manufacturing of a shaped electrode 200 according to a further alternative embodiment, wherein after cutting 30 the shaped electrode 200 from the dry electrode film, the shaped electrode 200 is contacted 101 with a liner. The shaped electrode 200 is optionally rolled up 111 and subsequently rolled off 121 with the liner for further processing. The shaped electrode 200 is then optionally stacked 40 onto a current collector, laminated 50 to the current collector, and further optionally the current collector is shaped by cutting 60 a corresponding shape from the current collector, forming a shaped current collector 300. This allows the shaped electrode to be temporarily stored, transported, and precisely positioned in downstream processing. Particularly it may be achieved that the shaped electrode can be introduced into a lamination step or cell assembly operation with improved positional control and minimal mechanical stress.

Figure 4 shows a shaped electrode 200 laminated to a shaped current collector 300. The shape of the shaped electrode 200 has a smaller area than the shape of the shaped current collector 300. The product obtained by the method according to the invention may have defined edge regions on the collector that may be used for electrical isolation, sealing, or welding of tabs. Particularly it may be achieved that the shaped electrode occupies only a central or application-specific portion of the collector surface, improving both cell safety and integration flexibility.

### Reference Signs

- 10: Dry mixing step
- 20: Forming step for dry electrode film
- 30: Cutting step for shaping the electrode
- 40: Stacking the shaped electrode onto the current collector
- 50: Laminating the shaped electrode to the current collector
- 60: Cutting a shape from the current collector
- 100: Contacting the dry electrode film with a liner
- 101: Contacting the shaped electrode with a liner
- 110: Rolling up the dry electrode film and liner
- 111: Rolling up the shaped electrode and liner
- 120: Rolling off the dry electrode film and liner
- 121: Rolling off the shaped electrode and liner
- 200: Shaped electrode
- 300: Shaped current collector

## Claims

1. A method for the manufacturing of a shaped electrode (200), the method comprising:
dry mixing (10) particles of active electrode material and binder to form a dry powder;
forming (20) a dry electrode film from the dry powder; and
cutting (30) a shaped electrode (200) from the dry electrode film.

2. The method according to claim 1, further comprising the steps of stacking (40) the shaped electrode (200) onto a current collector having a first surface after cutting (30) the shaped electrode from the dry electrode film, so that the shaped electrode (200) is in contact with the current collector, and laminating (50) the shaped electrode (200) to the current collector.

3. The method according to claim 2, further comprising the step of cutting (60) a shape from the current collector to obtain a shaped electrode (200) on a shaped current collector (300).

4. The method according to claim 3, wherein the shape of the shaped electrode (200) is aligned with the shape of the shaped current collector (300), wherein preferably the shape of the shaped electrode (200) has a smaller area than the shape of the shaped current collector (300).

5. The method according to any one of claims 1 to 4, wherein before cutting (30) the shaped electrode (200), the dry electrode film is contacted (100) with a surface of a liner, wherein the dry electrode film optionally is rolled up (110) with the liner on a roll for intermediate storage and/or transport and wherein the dry electrode film subsequently is rolled off (120) again with the liner from the roll for the step of cutting (30) the shape electrode (200) from the dry electrode film.

6. The method according to any one of claims 1 to 4, wherein before cutting (30) the shaped electrode (200), the dry electrode film is contacted (100) with a surface of a liner and the shaped electrode (200) is cut (30) from the dry electrode film on the liner, wherein the shaped electrode (200) is optionally rolled up (111) with the liner on a roll for intermediate storage and/or transport and wherein the shaped electrode (200) subsequently is rolled off (121) again with the liner from the roll for further application.

7. The method according to any one of claims 1 to 4, wherein after cutting (30) the shaped electrode (200), the shaped electrode (200) is contacted (101) with a surface of a liner, wherein the shaped electrode (200) is optionally rolled up (111) with the liner on a roll for intermediate storage and/or transport and wherein the shaped electrode (200) subsequently is rolled off (121) again with the liner from the roll for further application.

8. The method according to any one of claims 1 to 7, wherein the shaped electrode (200) is cut (30) from the dry electrode film using a cutting method selected from the group consisting of laser cutting, mechanical cutting, die cutting, jet cutting, and ultrasonic cutting, preferably laser cutting and die cutting.

9. The method according to any one of claims 1 to 8, wherein the cutting (30) of the shaped electrode (200) from the dry electrode film is performed while the dry electrode film is supported on a cutting surface.

10. The method according to any one of claims 1 to 9, wherein the binder particles consist of one or more polymers, preferably thermoplastic polymers.

11. The method according to any one of claims 1 to 10, wherein the active electrode material comprises particles of an electrochemically active compound, preferably selected from the group consisting of intercalation materials, alloying materials, conversion materials, and lithium metal.

12. The method according to claim 11, wherein the electrochemically active compound is selected from the group consisting of graphite, hard carbon, soft carbon, silicon, silicon oxides, silicon-carbon composites, lithium titanate, lithium cobalt oxide (LCO), lithium nickel cobalt manganese oxide (NMC), lithium manganese oxide (LMO), lithium iron phosphate (LFP), lithium nickel cobalt aluminum oxide (NCA), and mixtures thereof, preferably from the group consisting of silicon-carbon composites, lithium nickel cobalt manganese oxide (NMC), and graphite.

13. A shaped electrode (200) obtained by the method according any one of the preceding claims.

14. A battery electrode assembly comprising a shaped electrode (200) according to claim 13 and a shaped current collector (300), wherein the shape of the shaped electrode (200) has a smaller area than the shape of the shaped current collector (300), wherein the shaped electrode (200) is laminated to the current collector.

15. A battery comprising a shaped electrode (200) according to claim 13 and/or a battery electrode assembly according to claim 14.
